# EUROPEAN PATENT SPECIFICATION

(11) **EP 0 824 130 B1**
(45) Date of publication and mention of the grant of the patent: **09.01.2002**
(21) Application number: 97306127.8
(22) Date of filing: 12.08.1997
(51) Int. Cl.: C08K 3/00, C08K 3/32, C08K 5/02, C08L 67/00, C08K 5/00, C08L 67/02

(54) **Flame retardant polyester composition**
Flammhemmende Polyester-Zusammensetzung
Composition de polyester rétardatrice aux flammes

(30) Priority: 12.08.1996 US 689746
(43) Date of publication of application: 18.02.1998
(73) Proprietor: GENERAL ELECTRIC COMPANY, Schenectady, NY 12345 (US)
(72) Inventor: Tjahjadi, Mahari, Evansville, Indiana 47712 (US); Blackburn, Kirk J., Mount Vernon, Indiana 47620 (US); Gallucci, Robert Russell, Mount Vernon, Indiana 47620 (US); George, Eric R., Slingerlands, New York 12159 (US)
(74) Representative: Szary, Anne Catherine, Dr.

(56) References cited:
- EP-A- 0 078 238
- EP-A- 0 604 074
- EP-A- 0 736 566
- US-A- 4 421 888

## Description

This invention relates to flame retarded resin molding compositions having improved electrical properties.

### Background of the Invention

Resins such as poly(1,4-butylene terephthalate) are used in molding compositions due to its many excellent properties, i.e. strength, solvent resistance, etc. In applications which require good electrical properties, molded parts may be exposed to severe conditions, such as exposure to electrical discharge or to excessive current leakage across its surface. These conditions require not only that the molded part have flame resistance, but also that the molded part have a high degree of resistance to carbonization upon exposure to high voltage, i.e. good track resistance and a high degree of resistance to electrical discharge.

However, it has been a problem that flame retarded polyester resins have poor track resistance compared to the non-flame retarded resin. U.S. Pat. No. 4,000,109, Smith, et al, use a metal borate to improve track resistance in flame retarded poly(1,4-butylene terephthalate) resin. U.S. Pat. No. 4,421,888, Okada, discloses a flame retarded, talc and glass fiber reinforced, polyester blend having a sustained high track resistance. U.S. Pat. No. 4,636,544 to Hepp utilizes titanium dioxide to improve the Comparative Tracking Index CTI. Glass fibers which are typically added to increase the strength of the polyester compositions have an adverse effect on CTI. U.S. Patent 4,043,971 describes the use of CaSO₄ and/or BaSO4 as fillers for polybutylene terephthalate to give improved tracking resistance as compared to polybutylene terephthalate containing no fillers. As set forth in the patent, this is particularly surprising, since the use of similar fillers such as chalk (CaCO₃) leads to no such results.

U.S. Patent 4,296,021 relates to reinforced thermoplastic compositions that are provided comprising a high molecular weight linear polyester, and a minor proportion of aluminum silicate alone or in combination with glass fiber reinforcement. The use of the aluminum silicate elevates strength, modulus and heat deflection temperature, while retaining the inherent resistance to high voltage breakdown of the polyester resin component. U.S. Patent 4,456,723 relates to polyester molding composition having improved tracking resistance which includes a substantially water-free calcium phosphate. Hence, it is desirable to provide additional ingredients which can enhance the track resistance of glass fiber polyester composition.

### Summary of the Invention

It is an object of the present invention to provide flame retarded, reinforced polyester resin molding compositions, likewise, articles molded from them which have improved electrical properties.

Another object of the present invention is to provide flame retarded polyester resin molded articles and the molding compositions which are suitable for molded electrical devices, such as electrical outlets, circuit breakers, switches, fuse holders, lamp sockets, distributor caps, or ignition coils.

According to the present invention, there are provided flame retarded resin molding compositions with enhanced electrical properties, particularly track resistance, which comprise a polyester, a flame retarding amount of a halogenated flame retardant selected from a poly (haloarylmethacrylate), a poly (haloarylacrylate) and halogenated polystyrene, mineral filler, and an effective amount of a pyro/polyphosphate selected from the group consisting of metal pyrophosphates, metal polyphosphates, metal acid pyrophosphates, metal acid polyphosphates and mixtures thereof for improving the electrical properties.

In accordance with another aspect of the present invention, an olefinic polymer is included in the composition, in addition to the pyro/polyphosphate for enhancing the electrical properties.

### Description of the Preferred Embodiments

In accordance with the principles of the present invention, the combination of ingredients are selected so that the compositions are suitable for electrical connectors and have improved Comparative Tracking Index (CTI). CTI is typically measured by UL-746A or ASTM-D3638-85 or IEC-112 3,d Publication. The method of this test is intended to indicate the relative behavior of solid electrical insulating materials with regard to their susceptibility to surface tracking when exposed under electrical stress, to water, and other contaminants from the surroundings. This method is especially suitable for testing synthetic resin moldings. Comparative Tracking Index; the voltage, as determined under the conditions specified in this test method, which will cause failure with the application of 50 drops of electrolyte to the specimen, is used as a measure of the susceptibility of the material to tracking.

Preferably the CTI of the final composition is greater than or equal to about 400, and preferably greater than about 450 volts. Typically neat poly (1,4-butylene terephthalate) (PBT) has a CTI value of 600 volts but the addition of flame retardants and glass fibers tend to decrease the CTI value to about 200 to 250 volts. Hence, it is desirable to select the remaining ingredients so as to not detract from the desirable flame retardancy and mechanical properties but enhance the CTI of the final composition.

Preferably, the desired flame retardancy is V-0 according to Underwriters Laboratories Test No. 94. In additional to high CTI and flame retardancy, important properties include good mechanical properties, good processability, i.e. short molding cycle times, good flow, and good insulation properties. Flame retardants and reinforcing materials such as glass fibers are desirably separate components present in the resin to enhance the flame retardant and strength properties, respectively.

In accordance with the principles of the present invention, the resin composition includes a pyro/polyphosphate selected from the group consisting of metal pyrophosphates, metal polyphosphates, metal acid pyrophosphates, metal acid polyphosphates, and mixtures thereof. Preferably the pyro/polyphosphate has the formula (I):

(I) M^{z} ₓH_{y}PₙO₃ₙ₊₁

wherein M is a metal, x is a number from 1 to 12, y is a number from 0 to 12, n is a number from 2 to 10, z is a number from 1 to 5 and the sum of (xz)+y is equal to n+2. M is preferably a Group IA, IIA, IB or IIB metal and more preferably sodium or potassium.

These compounds include, for example, pyrophosphates of the formula Na₃HP₂O₇; K₂H₂P₂O₇; Na₃H₂P₂O₁₀; KNaH₂P₂O₇ and Na₂H₂P₂O₇ or sodium hexameta phosphate, Na₈P₆O₁₉. Typically, the metal pyro/polyphosphates are hydrates and may be in powder form. Sodium acid pyrophosphate is the most preferred.

The pyro/polyphosphate is added to the flame retarded molding compositions in an amount effective to increase track resistance but not in such amount that other essential properties of the molding composition are substantially degraded. Preferably, the final composition comprises from about 0.5 to about 40, and more preferably from about 0.5 to about 20 percent of the pyro/polyphosphate for improving the CTI.

Additionally, it has been found that olefinic type polymers may be added to provide enhancement of the CTI. Typical olefinic type polymers are the addition polymers of olefins. Suitable olefins include ethylene, propylene, butylene, hexene and octene or their copolymers.

Polyolefins may be high density polyethylene (d=above 0.94), low density polyethylene (d=about 0.92), linear low density polyethylene (d=0.916-0.940) or polypropylene. The olefin polymers may be copolymers, including ethylene-propylene copolymers and those containing acid or ester structural units derived, for instance, from acrvlic acid, methacrvlic acid, acrylic esters, methacrylic esters, alkyl vinyl esters or the like, most often in the amount of about 5-25%, preferably 10-25 percent by weight. Most preferred are copolymers of ethylene with an alkyl acrylate or alkylmethacrylate such as ethyl acrylate or methacrylate.

Preferably, olefinic type polymers are included in the final composition in an amount from about 1 to about 10, and more preferably from about 3 to about 7 percent by weight of the final composition as an effective amount to improve the CTI.

Included in the resin compositions of the present invention are mineral filler materials which act with the pyro/polyphosphates to enhance the track resistance. The preferred mineral fillers enhance the CTI. Typical mineral fillers include metal sulfates, micas, clays such as alumino silicates and alumino magnesium silicate, talcs, glass flake, wollastonite, metal oxides such as titanium dioxide, zinc sulfide, ground quartz, and the like. Preferred mineral fillers are the talc, clays and metal sulfates. Typical silicates include calcium silicates such as Wollastonite; aluminum silicates such as Kaolin which is a clay material composed of fine-grained mineral kaolinite; hydrated magnesium silicates known as Talc; silica and alumina type mineral materials, and Mica which is a hydrous aluminosilicate material. Clay is a hydrated aluminum silicate generalized by the formula Al₂O₃SiO₂·xH₂O

The metal sulfate salts as well as their hydrates are preferred mineral fillers. Preferred metal sulfate salts are the Group IA and Group IIA metal sulfates with barium, calcium and magnesium sulfates being preferred.

Barium sulfate which is non-toxic and insoluble in dilute acids is especially preferred. Barium sulfate may be in the form of the naturally occurring barytes or as synthetically derived barium sulfate using well known synthetic techniques. The particle size may vary from 0.5 to 50 microns, preferably from 1 to 15 microns and most preferably 8 microns.

In most applications, the pyro/polyphosphates, mineral filler, and reinforcing material such as glass fibers, comprise the filler material, and desirably represent 5 to 70% and preferably from 10 to 50% of the total weight percent of the composition. Based on the total weight of the composition, reinforcement material is preferably present in an amount from 5 to 30 percent by weight, mineral filler in an amount from 3 to 30 percent by weight and pyro/polyphosphate in an amount from 0.5 to 20 percent by weight.

To provide desired stiffness, the reinforcing material is desirably a glass fiber reinforcing agent. As previously discussed, the inclusion of glass fiber deleteriously reduces the CTI. Hence, other constituents are desirable selected to enhance the CTI.

The glass fiber or filamentous glass is employed as a reinforcement in the present compositions. For compositions ultimately to be employed for electrical uses, it is preferred to use fibrous glass filaments comprised of borosilicate glass that is relatively soda-free. This is known as "E" glass. The filaments are made by standard processes, e.g., by steam or air blowing, flame blowing and mechanical pulling. The preferred filaments for plastic reinforcement are made by mechanical pulling. The filament diameters preferably range from about 3 to 30 microns.

The length of the glass filaments and whether or not they are bundled into fibers and the fibers bundled in turn into yarns, ropes or rovings, or woven into mats and the like are also not critical to the invention. However, in preparing the molding compositions it is convenient to use the filamentous glass in the form of chopped strands of from about 0.318cm (1/8") to about 1.27cm (1/2") long. In articles molded from the compositions on the other hand, even shorter lengths will be encountered because, during compounding considerable fragmentation will occur.

The amount of flame-retardant additive should be present in an amount at least sufficient to reduce the flammability of the polyester resin, preferably to a UL94 V-0 rating. The amount will vary with the nature of the resin and with the efficiency of the additive. In general, however, the amount of additive will be from 2 to 20 percent by weight based on the weight of resin. A preferred range will be from about 5 to 15 percent.

The halogenated aromatic flame-retardants used in the present invention are halogenated polystyrene, poly (haloaryl acrylate), poly (haloaryl methacrylate), or mixtures thereof. Poly (haloaryl acrylate) is preferred with the most preferably being poly (pentabromobenzyl acrylate). PBB-PA has been known for some time, and is a valuable flame-retardant material, useful in a number of synthetic resins. PBB-PA is prepared by the polymerization of pentabromobenzyl acrylate ester (PBB-MA). The PBB-PA polymeric flame-retardant material is incorporated into the synthetic resin during processing to impart flame retardant characteristics.

Examples of other suitable flame retardants are brominated polystyrenes such as polydibromostyrene and polytribromostyrene.

The flame retardants are typically used with a synergist, particularily inorganic antimony compounds. Such compounds are widely available or can be made in known ways. Typical, inorganic synergist compounds include Sb₂O₅; SbS₃; and the like. Especially preferred is antimony trioxide (Sb₂O₃). Synergists such as antimony oxides, are typically used at about 0.5 to 15, and more preferably from 1 to 6 percent by weight based on the weight percent of resin in the final composition.

Also, the final composition may contain polytetrafluoroethylene (PTFE) type resins or copolymers used to reduce dripping in flame retardant thermoplastics.

Suitable polyester components include crystalline polyesters such as polyesters derived from an aliphatic or cycloaliphatic diols, or mixtures thereof, containing from 2 to about 10 carbon atoms and at least one aromatic dicarboxylic acid. Preferred polyesters are derived from an aliphatic diol and an aromatic dicarboxylic acid having repeating units of the following general formula: 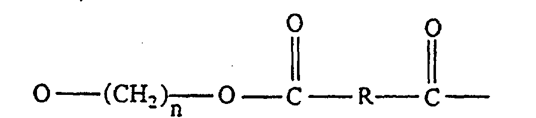 wherein n is an integer of from 2 to 6. R is a C₆-C₂₀ aryl radical comprising a decarboxylated residue derived from an aromatic dicarboxylic acid.

Examples of aromatic dicarboxcylic acids represented by the decarboxylated residue R are isophthalic or terephthalic acid, 1,2-di(p-carboxyphenyl)ethane, 4,4'-dicarboxydiphenyl ether, 4,4' bisbenzoic acid and mixtures thereof. All of these acids contain at least one aromatic nucleus. Acids containing fused rings can also be present, such as in 1,4-1,5- or 2,6-naphthalenedicarboxylic acids. The preferred dicarboxcylic acids are terephthalic acid, isophthalic acid, naphthalene dicarboxcylic acid or mixtures thereof.

The most preferred polyesters are poly(ethylene terephthalate) ("PET"), and poly(1,4-butylene terephthalate), ("PBT"), poly(ethylene naphthanoate) ("PEN"), poly(butylene naphthanoate), ("PBN") and poly(propylene terephthalate) ("PPT").

Also contemplated herein are the above polyesters with minor amounts, e.g., from about 0.5 to about 5 percent by weight, of units derived from aliphatic acid and/or aliphatic polyols to form copolyesters. The aliphatic polyols include glycols, such as poly(ethylene glycol). Such polyesters can be made following the teachings of, for example, U.S. Pat. Nos. 2,465,319 and 3,047,539.

The preferred poly(1,4-butylene terephthalate) resin used in this invention is one obtained by polymerizing a glycol component at least 70 mol %, preferably at least 80 mol %, of which consists of tetramethylene glycol and an acid component at least 70 mol %, preferably at least 80 mol %, of which consists of terephthalic acid, or polyester-forming derivatives therefore.

The polyesters used herein have an intrinsic viscosity of from about 0.4 to about 2.0 dl/gas measured in a 60:40 phenol/tetrachloroethane mixture or similar solvent at 23°-30° C. VALOX Registered TM 315 polyester is particularly suitable for this invention having an intrinsic viscosity of 1.1 to 1.4 dl/g.

Blends of polyesters may also be employed in the composition. As indicated earlier, preferred polyesters are poly(ethylene terephthalate) and poly(1,4-butylene terephthalate). When blends of these preferred components are employed the polyester resin component can comprise from about 1 to about 99 parts by weight poly(ethylene terephthalate) and from about 99 to about 1 part by weight poly(1,4-butylene terephthalate) based on 100 parts by weight of both components combined.

Additional ingredients may include other thermoplastic resins in an amount up to about 50 percent by weight based on the weight of the formulation. Such other suitable thermoplastic resins which may be used include polyamides, acrylic and methacrylic polymers or copolymers; epoxy resins; polycarbonates; polyetherimides; phenylene oxide based resins such as polyphenylene oxide and blends of polyphenylene oxide and styrene resins; polyaryl ethers; polyphenylene sulfides; polyetherketones, aliphatic polyketones, polysulfones; and ordered aromatic copolymers especially liquid crystalline polymers.

Such additional resin compositions may include, an effective amount of any of the known impact modifiers useful for polyesters and polyester blends. These may be added to the compositions by themselves or in combination with the aforementioned aromatic polycarbonates. The preferred impact modifiers generally comprise an acrylic or methacrylic grafted polymer of a conjugated diene or an acrylate elastomer, alone or copolymerized with a vinyl aromatic compound. Especially preferred grafted polymers are the core-shell polymers of the type available from Rohm & Haas, for example Acryloid EXL2691 and Acryloid EXL3330. In general these impact modifiers contain units derived from butadiene or in combination with a vinyl aromatic compound, acrylate, or alkylacrylate ester such as methacrylate. The aforementioned impact modifiers are believed to be disclosed in Fromuth, et al., U.S. Pat. No. 4,180,494; Owens, U.S. Pat. No. 3,808,180; Farnham, et al., U.S. Pat. No. 4,096,202; and Cohen, et al., U.S. Pat. No. 4,260,693, all incorporated herein by reference.

Additional preferred impact modifiers are of the type disclosed in U.S. Pat. No. 4,292,233, incorporated by reference. These impact modifiers comprise, generally, a relatively high content of a partially cross-linked butadiene polymer grafted base having grafted thereon acrylonitrile and styrene.

Other ingredients employed in low amounts, typically less than 5 percent by weight of the total composition, include stabilizers, lubricants, colorants, plasticizers, nucleants, antioxidants and UV absorbers. These ingredients should be selected so as not to deleteriously affect the desired properties of the molded resin.

Although it is not essential, best results are obtained if the ingredients are precompounded, pelletized and then molded. Precompounding can be carried out in conventional equipment. For example, after predrying the polyester resin, other ingredients, and, optionally, other additives and/or reinforcements, a single screw extruder is fed with a dry blend of the composition. On the other hand, a twin screw extrusion machine can be fed with resins and additives at the feed port and reinforcement down stream.

Portions of the blend can be precompounded and then, extruded with the remainder of the formulation, and-cut or chopped into molding compounds, such as conventional granules, pellets, etc. by standard techniques.

The compositions can be molded in any equipment conventionally used for thermoplastic compositions. For example, good results will be obtained in an injection molding machine, e.g. of the 80 ton Van Dorn type, with conventional temperatures which depend on the particular thermoplastic utilized. If necessary, depending on the molding properties of the polyester, the amount of additives and/or reinforcing filler and the rate of crystallization of the polyester component, those skilled in the art will be able to make conventional adjustments in molding cycles to accommodate the composition.

Flammability tests were performed with the procedure of Underwriter's Laboratory Bulletin 94 entitled "Combustion Tests for Classification of Materials, UL-94." According to this procedure, the materials were classified as either UL-94 V-0, UL-94 V-1 or UL-94 V-2 on the basis of the tests results obtained for ten samples. The criteria for each of these flammability classifications according to UL-94, are, briefly, as follows:
V-0: the average period of flaming and /or smoldering after removing the igniting flame should not exceed five seconds and none of the samples should produce drips of particles which ignite absorbent cotton.
V-1: the average period of flaming and/or smoldering after removing the igniting flame should not exceed twenty-five seconds and none of the samples should produce drips of particles which ignite absorbent cotton.
V-2: the average period of flaming and/or smoldering after removing the igniting flame should not exceed twenty-five seconds and the samples may produce drips of burning particles which ignite absorbent cotton.

The following examples illustrate the preparation of certain compositions within the scope of this invention. They are not to be construed to limit the invention in any manner whatsoever. All parts, except as otherwise indicated, are by weight.

### Examples

The formulations shown below in Tables 1, 2, and 3 were preblended and extruded on a 30:1 L/D Single Screw Extruder with HPM double-wave screw at barrel and die head temperature at 260-266°C (500-510 degrees F) and 100 rpm screw speed. The extrudate was cooled through a water bath prior to pelletizing. Test parts were injection molded on a van Dorn molding machine with a set temperature of approximately 260-266°C (500 to 510 degrees F). The pellets were dried for 3-4 hours at 121°C (250°F) in a forced air circulating oven prior to injection molding.

The control experiments labeled A-M, 9,10 and 12 showed low CTI. Compared to the control experiments, the formulations of the invention, labeled 1-8 and 11, containing pyro/polyphosphates and sulfates or minerals showed improved CTI. The pyro/polyphosphate are metal pyrophosphates, metal polyphosphates, metal acid pyrophosphates, or metal acid polyphosphates.

Articles which are molded from the formulated resins are suitable for use in or as electrical devices such as electrical outlets, circuit breakers, switches, fuse holders, lamp sockets, distributor caps, enclosures, or ignition coils. Such articles may be formed by conventional molding techniques.

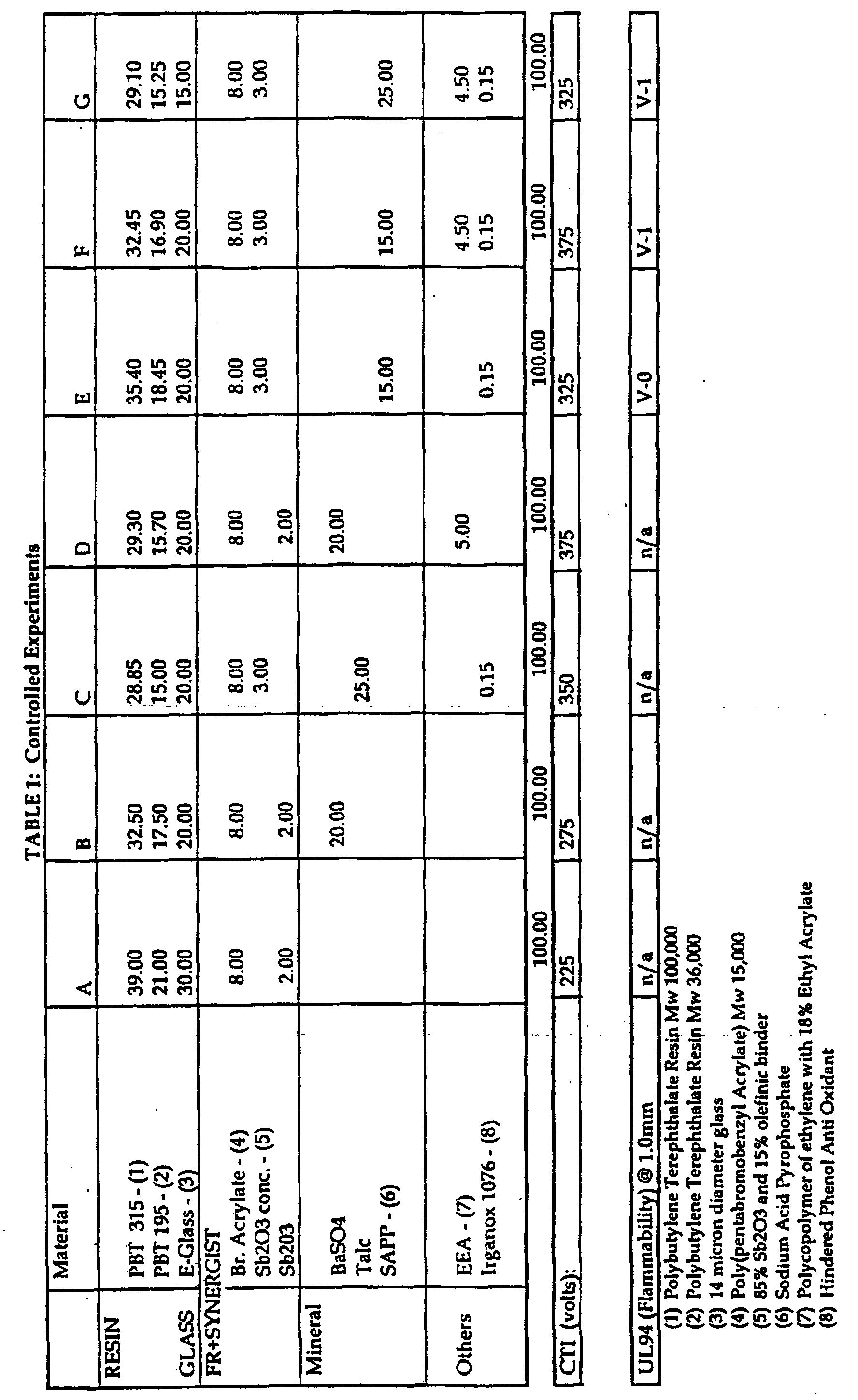

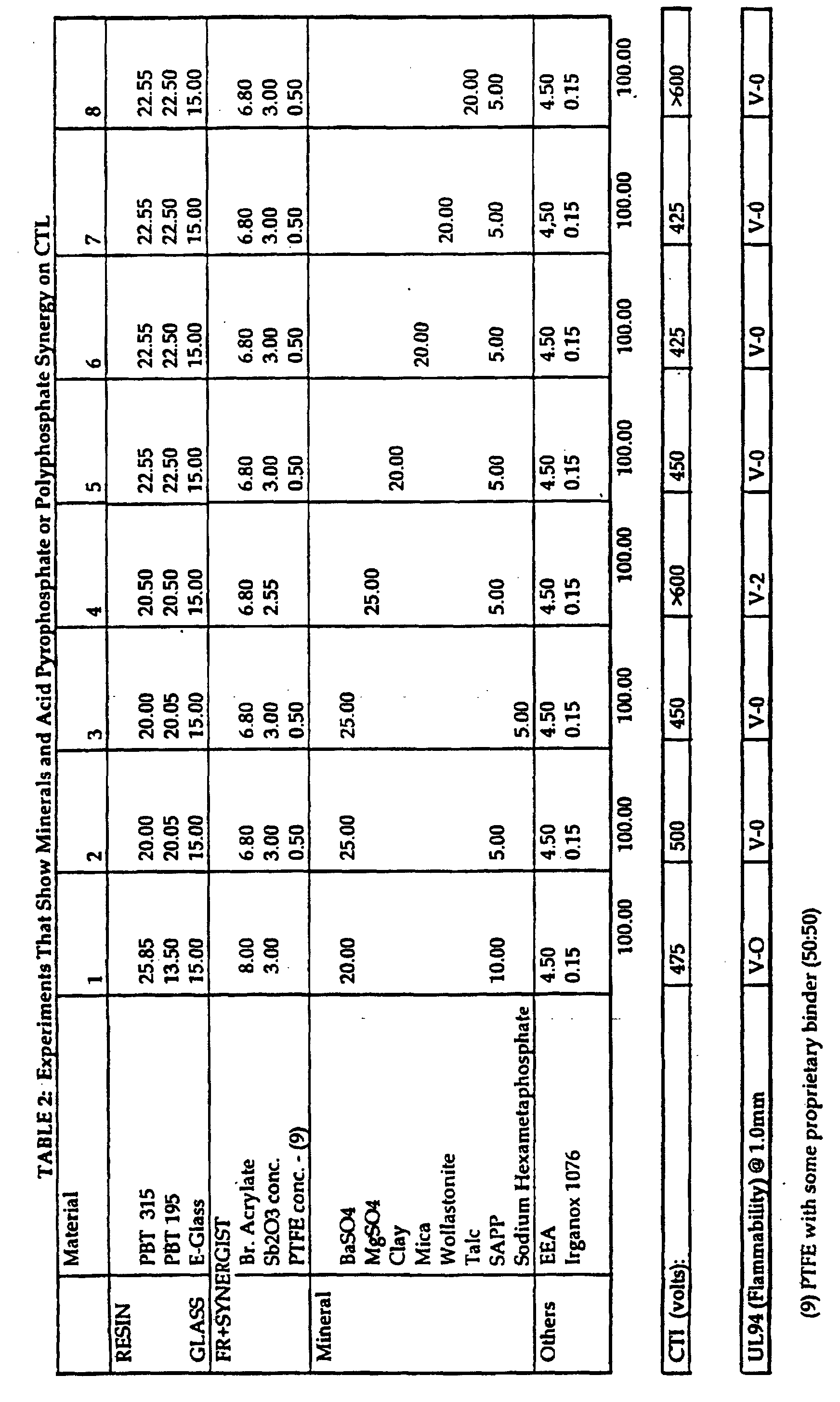

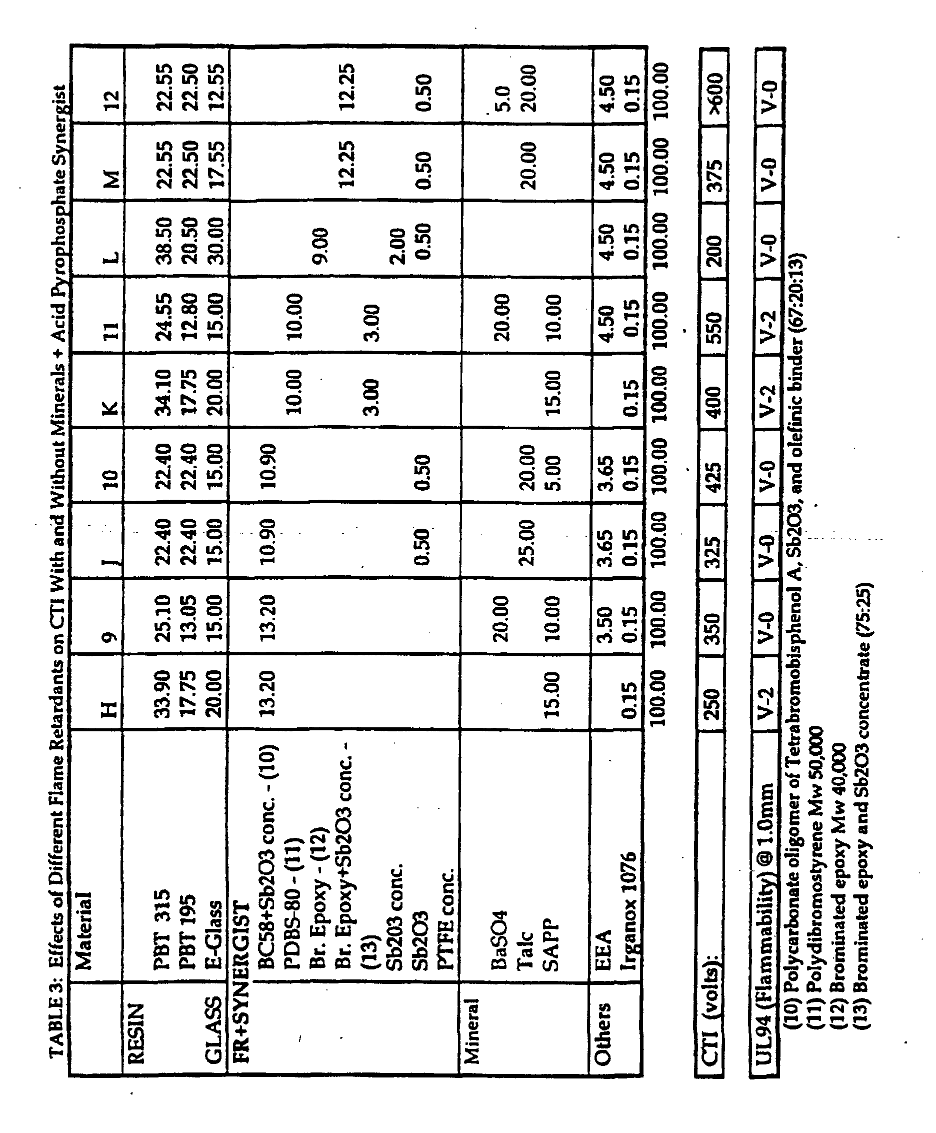

## Claims

1. A flame retardant resin molding composition with enhanced electrical properties comprising a polyester resin, a flame retarding amount of halogenated flame retardant selected from a poly (haloarylmethacrylate), a poly (haloarylacrylate) and halogenated polystyrene, a mineral filler, and an effective amount of a pyro/polyphosphate selected from the group consisting of metal pyrophosphates, metal polyphosphates, metal acid pyrophosphates, metal acid polyphosphates and mixtures thereof for improving the electrical properties of said composition.

2. A flame retardant resin molding composition according to Claim 1, wherein said pyro/polyphosphate has the formula:
M^{z} ₓH_{y}PₙO₃ₙ₊₁,
wherein M is a metal, z is from 1 to 5, x is a number from 1 to 12, y is a number from 0 to 12, n is a number from 2 to 10.

3. A flame retarded resin molding composition according to Claim 2 wherein M is a Group IA, IIA, IB or IIB metal.

4. A flame retarded resin molding composition according to Claim 2 wherein said pyro/polyphosphate is sodium acid pyrophosphate.

5. A flame retarded resin molding composition according to Claim 2 wherein M is sodium or potassium.

6. A flame retarded resin molding composition according to Claim 1 wherein said polyester is selected from the group consisting of poly(ethylene terephthalate) ("PET"), and poly(1,4-butylene terephthalate, ("PBT"), poly(ethylene naphthanoate) ("PEN"), poly(butylene naphthanoate), ("PBN") and (polypropylene terephthalate) ("PPT"), and mixtures thereof.

7. A flame retarded resin molding composition according to Claim 1 wherein mineral filler comprises a metal sulphate, talc, clay, mica, or wollastonite.

8. A flame retarded resin molding composition according to Claim 1 wherein said resin molding composition includes a glass fiber reinforcing material.

9. A flame retarded resin molding composition according to claim 8 wherein said glass fiber is present in an amount of from 5 to 30 percent by weight and said pyro/polyphosphate is present in an amount of from 0.5 to 20 percent by weight, wherein said weight percents are based on the total weight of the composition.

10. A flame retarded resin molding composition according to Claim 1 further comprising an olefinic polymer.

## Patentansprüche

1. Flammhemmende Harzformmasse mit verbesserten elektrischen Eigenschaften, umfassend ein Polyesterharz, eine flammhemmende Menge von halogeniertem flammhemmenden Mittel, ausgewählt aus einem Poly(halogenarylmethacrylat), einem Poly(halogenarylacrylat) und halogeniertem Polystyrol, einem Mineralfüllstoff und einer wirksamen Menge eines Pyro/Polyphosphats, ausgewählt aus der Gruppe bestehend aus Metallpyrophosphaten, Metallpolyphosphaten, sauren Metallpyrophosphaten, sauren Metallpolyphosphaten und deren Mischungen, um die elektrischen Eigenschaften der Masse zu verbessern.

2. Flammhemmende Harzformmasse nach Anspruch 1, worin das Pyro/Polyphosphat die Formel hat:
M^{z}ₓH_{y}PₙO₃ₙ₊₁,
worin M ein Metall ist, z von 2 bis 5 ist, x eine Zahl von 1 bis 12 ist, y eine Zahl von 0 bis 12 ist, n eine Zahl von 2 bis 10 ist.

3. Flammhemmende Harzformmasse nach Anspruch 2, worin M ein Metall der Gruppe IA, IIA, IB oder IIB ist.

4. Flammhemmende Harzformmasse nach Anspruch 2, worin das Pyro/Polyphosphat saures Natriumpyrophosphat ist.

5. Flammhemmende Harzformmasse nach Anspruch 2, worin M Natrium oder Kalium ist.

6. Flammhemmende Harzformmasse nach Anspruch 1, worin der Polyester ausgewählt ist aus der Gruppe bestehend aus Poly(ethylenterephthalat) ("PET") und Poly(1,4-butylenterephthalat) ("PBT"), Poly(ethylennaphthanoat) ("PEN"), Poly(butylennaphthanoat) ("PBN") und Poly(propylenterephthalat) ("PPT") und deren Mischungen.

7. Flammhemmende Harzformmasse nach Anspruch 1, worin der Mineralfüllstoff ein Metallsulfat, Talk, Ton, Glimmer oder Wollastonit umfasst.

8. Flammhemmende Harzformmasse nach Anspruch 1, worin die Harzformmasse ein verstärkendes Glasfaser-Material einschließt.

9. Flammhemmende Harzformmasse nach Anspruch 8, worin die Glasfaser in einer Menge von 5 bis 30 Gew.-% und das Pyro/Polyphosphat in einer Menge von 0,5 bis 20 Gew.-% vorhanden ist, wobei die Gew.-%e auf dem gesamten Gewicht der Masse beruhen.

10. Flammhemmende Harzformmasse nach Anspruch 1, die weiter ein olefinisches Polymer umfasst.

## Revendications

1. Composition de moulage de résine ignifugée présentant des propriétés électrique améliorées, comprenant une résine polyester, une quantité ignifugeante d'un agent ignifugeant halogéné choisi parmi un poly(méthacrylate d'halogénoaryle), un poly(acrylate d'halogénoaryle) et un polystyrène halogéné, une charge minérale, et une quantité efficace d'un pyro/polyphosphate choisi dans l'ensemble constitué par les pyrophosphates métalliques, les polyphosphates métalliques, les pyrophosphates acides métalliques, les polyphosphates acides métalliques et leurs mélanges, pour améliorer les propriétés électriques de ladite composition.

2. Composition de moulage de résine ignifugée selon la revendication 1, dans laquelle ledit pyro/polyphosphate répond à la formule :
M^{z} ₓH_{y}PₙO₃ₙ₊₁,
dans laquelle M représente un métal, z vaut de 1 à 5, x représente un nombre de 1 à 12, y représente un nombre de 0 à 12, n représente un nombre de 2 à 10.

3. Composition de moulage de résine ignifugée selon la revendication 2, dans laquelle M représente un métal du Groupe IA, IIA, IB ou IIB.

4. Composition de moulage de résine ignifugée selon la revendication 2, dans laquelle ledit pyro/polyphosphate est un pyrophosphate acide de sodium.

5. Composition de moulage de résine ignifugée selon la revendication 2, dans laquelle M représente le sodium ou le potassium.

6. Composition de moulage de résine ignifugée selon la revendication 1, dans laquelle ledit polyester est choisi dans l'ensemble constitué par le poly(éthylène téréphtalate) ("PET") et le poly(1,4-butylène téréphtalate) ("PBT"), le poly(éthylène naphtanoate) ("PEN"), le poly(butylène naphtanoate) ("PBN"), et le poly(propylène téréphtalate) ("PPT"), et leurs mélanges.

7. Composition de moulage de résine ignifugée selon la revendication 1, dans laquelle la charge minérale comprend un sulfate métallique, du talc, de l'argile, du mica ou de la wollastonite.

8. Composition de moulage de résine ignifugée selon la revendication 1, ladite composition de moulage de résine comprenant un matériau de renforcement de type fibre de verre.

9. Composition de moulage de résine ignifugée selon la revendication 8, dans laquelle lesdites fibres de verre sont présentes en une quantité de 5 à 30 % en poids et ledit pyro/polyphosphate est présent en une quantité de 0,5 à 20 % en poids, dans laquelle lesdits pourcentages pondéraux sont donnés par rapport au poids total de la composition.

10. Composition de moulage de résine ignifugée selon la revendication 1, comprenant en outre un polymère oléfinique.
